(19) Europäisches Patentamt
European Patent Office
Office européen des brevets

(11) **EP 3 761 213 A1**

(12) **EUROPEAN PATENT APPLICATION**

(43) Date of publication:
06.01.2021 Bulletin 2021/01

(51) Int Cl.:
*G06F 30/20* (2020.01)   *G06F 30/28* (2020.01)

(21) Application number: 19204374.3

(22) Date of filing: 21.10.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 02.07.2019   CN 201910588999

(71) Applicant: Shanghai Typhoon Institute, CMA Shanghai 200030 (CN)

(72) Inventors:
• YU, Hui
  Shanghai, 200030 (CN)
• TANG, Sheng-ming
  Shanghai, 200030 (CN)
• FANG, Ping-zhi
  Shanghai, 200030 (CN)
• CHEN, Pei-yan
  Shanghai, 200030 (CN)

(74) Representative: Meyer-Dulheuer MD Legal Patentanwälte PartG mbB
Franklinstraße 61-63
60486 Frankfurt am Main (DE)

Remarks:
Amended claims in accordance with Rule 137(2) EPC.

(54) **A WIND FIELD DYNAMIC DOWNSCALING METHOD BASED ON AERODYNAMIC PARAMETERS OF SIMPLIFIED TERRAIN**

(57) A wind field dynamic downscaling method based on aerodynamic parameters of simplified terrain, the method comprises steps of: numerically simulating the simplified terrain based on computational fluid dynamics to obtain the aerodynamic parameters of the simplified terrain; redistributing the wind speed at the corner point of a mesoscale grid within the downscaling grid based on terrain elevation data, land use type data and the aerodynamic parameters, to implement the wind field downscaling calculation. It is based on the aerodynamic parameters of the two-dimensional simplified terrain, and a new wind field dynamic downscaling scheme is designated by adding the high-resolution terrain elevation data and the land use type data.

Fig. 1

## Description

### TECHNICAL FIELD

The present invention is in the technical field of meteorological computation, in particular, relates to a wind field dynamic downscaling method based on aerodynamic parameters of simplified terrain.

### BACKGROUND

In recent years, with continuous development of computers as well as the improvement of computing power and resources, the horizontal resolution of numerical models in various institutions around the world has been increased to 2~10 km, and is moving toward 1 km. In theory, with the increase of the horizontal resolution, the simulation of the boundary layer process in numerical models should be more precise in time and space, and more accurate in quantitation, but the facts may be completely the opposite (Bowen Zhou et al., 2016). As the horizontal resolution has been increased to ~1 km level, the most energetic convection vortex in the boundary layer is in a partially resolvable and partially sub-grid state, so the traditional boundary layer parameterization schemes based on ensemble average method are not applicable, and Wyngaard (2004) defines this area as "grey zone" with the horizontal resolution of 100~2000 m. Therefore, in current technical conditions, the mesoscale numerical models do not have the wind field forecasting capability with the horizontal resolution of 100 m level.

At present, the application of dynamic downscaling technology is mainly concentrated in specific areas, such as wind farms and cities, having horizontal scale of usually only tens of kilometers, which cannot satisfy the need for a high-resolution wind field of large-area systems, such as power lines, railways, etc., with horizontal scales of hundreds of kilometers or even thousands of kilometers.

The Chinese patent application CN108363882A discloses a design wind speed calculation method for mountain power transmission line based on dynamic downscaling mode, in which a mesoscale WRF mode can be utilized to provide the downscaling data with the horizontal resolution of 1 km $\times$ 1 km, and then the wind speed simulation result is interpolated into the construction sites. However, the patent cannot predict the wind field under complex terrain conditions, and can only achieve wind field assessment and simulation. Besides, the patent cannot obtain the high-resolution wind field with the horizontal resolution of 100 m level, and its horizontal resolution is only 1 km $\times$ 1 km.

The Chinese patent application CN107688906A introduces a multi-method-fused downscaling analysis system and method for meteorological elements of power transmission lines, capable of accurately predicting the meteorological elements in small areas or at a specified point by downscaling techniques. However, the patent can only predict the meteorological elements in small areas or at a fixed point, and cannot predict large areas with horizontal scales of hundreds of kilometers or even thousands of kilometers. Besides, the downscaling method in this patent is a statistics-based downscaling method rather than a dynamic downscaling method, and the method is highly dependent on observational data and cannot be applied in many areas of China having no meteorological observational data.

The Chinese patent application CN106326625A discloses a method for simulating wind field by coupling WRF (Weather Research and Forecasting) and OpenFOAM modes, capable of downscaling the data with the horizontal resolution of several kilometers in the WRF mode into the data with the resolution of 30 m in the OpenFOAM mode. However, similar to the existing mesoscale WRF mode nesting the small-scale CFD mode, the dynamic downscaling method used in this patent is only applicable to areas with a horizontal range of tens of kilometers, which cannot satisfy large-area systems with horizontal scales of hundreds of kilometers or even thousands of kilometers. In addition, due to the timeliness of OpenFOAM software calculations, the method of this patent is only applicable to the simulation or evaluation of the wind field and is not applicable to wind field forecast.

The Chinese patent CN102930177B discloses a wind speed forecasting method based on fine boundary layer numerical mode for wind farm in complex terrain, capable of predicting the wind speed of the near-surface layer with the horizontal resolution of 100 m within 500 square kilometers around the wind farm, reducing the average root mean square error between the predicted and observed wind speeds at the height of 70 m from 3.13 m/s to 2.62 m/s, and increasing the relevant coefficient from 0.56 to 0.59. However, the fine boundary layer mode adopted in this patent is still only applicable to the wind farm area with a horizontal scale of tens of kilometers, and cannot satisfy the large-area system with horizontal scales of hundreds of kilometers or even thousands of kilometers.

### SUMMARY

In view of this, the object of the present invention is to provide a wind field dynamic downscaling method based on aerodynamic parameters of simplified terrain. It is based on the aerodynamic parameters of the two-dimensional simplified terrain, and a new wind field dynamic downscaling scheme is designated by adding the high-resolution terrain elevation data and the land use type data.

In order to achieve the above object, the present invention provides the following technical solution:
In general, one innovative aspect of the subject matter described in this specification can be embodied in a wind field dynamic downscaling method based on aerodynamic parameters of simplified terrain, the method comprises steps of:

Numerically simulating the simplified terrain based on computational fluid dynamics to obtain the aerodynamic parameters of the simplified terrain;
Redistributing the wind speed at the corner point of a mesoscale grid within the downscaling grid based on terrain elevation data, land use type data and the aerodynamic parameters, to implement the wind field downscaling calculation.

Optionally, the simplified terrain is a two-dimensional simplified terrain including two basic formations, namely, two-dimensional wind speed inflow upslope and two-dimensional wind speed inflow downslope.
Optionally, after numerically simulating the simplified terrain based on computational fluid dynamics to obtain the aerodynamic parameters of the simplified terrain, the method further comprises: performing a wind tunnel test to verify the aerodynamic parameters of the simplified terrain obtained by numerical simulation.
Optionally, before redistributing the wind speed at the corner point of the mesoscale grid within the downscaling grid based on the terrain elevation data, the land use type data and the aerodynamic parameters to implement the wind field downscaling calculation, the method further comprises: acquiring the mesoscale wind field of a region based on an area-limited numerical weather prediction mode.
Optionally, said aerodynamic parameters of the simplified terrain comprise an average wind speed ratio at a midpoint of the slope, and said average wind speed ratio satisfies:

$$R_{ix} = \frac{U_{ix}}{U_f}, \quad R_{iz} = \frac{U_{iz}}{U_f},$$

Wherein $R_{ix}$ and $R_{iz}$ are the average wind speed ratios of the measured point $i$ in the downwind direction and the vertical direction respectively, $U_{ix}$ and $U_{iz}$ are the average wind speeds of the measured point $i$ in the downwind direction and the vertical direction respectively, and $U_f$ is the average wind speed of the uniform inflow.
Optionally, redistributing the wind speed at the corner point of the mesoscale grid within the downscaling grid based on the terrain elevation data, the land use type data and the aerodynamic parameters to implement the wind field downscaling calculation, comprises:

Assigning the wind speed at the corner point of the mesoscale grid to the downscaling grid;
Calculating the wind speed at the midpoint of the mesoscale grid based on the downscaling grid with the assignment;
Calculating the wind speed at the center point of the mesoscale grid based on the wind speed at the midpoint of the mesoscale grid;
Completing a first downscaling calculation based on the wind speed at the center point of the mesoscale grid.

Optionally, the wind speed at the center point of the mesoscale grid comprises a zonal wind speed and a meridional wind speed at the center point of the mesoscale grid;
The zonal wind speed at the center point of the mesoscale grid satisfies:

$$u_{m+1,n+1} = \begin{cases} u_{m,n+1} \cdot Ri_{m+1,n+1} & \left( u_{m,n+1} > 0 \right) \\ u_{m+2,n+1} \cdot Ri_{m+1,n+1} & \left( u_{m+2,n+1} < 0 \right) \end{cases},$$

Where $u_{m+1,n+1}$ represents the zonal wind speed at the center point of the mesoscale grid, $u_{m,n+1}$ and $u_{m+2,n+1}$ represent the zonal wind speeds at the midpoints of the two opposite sides in the latitudinal direction of the mesoscale grid respectively, and $Ri_{m+1,n+1}$ represents the average wind speed ratio at the center point of the mesoscale grid;
The meridional wind speed at the center point of the mesoscale grid satisfies:

$$v_{m+1,n+1} = \begin{cases} v_{m+1,n} \cdot Ri_{m+1,n+1} & \left( v_{m+1,n} > 0 \right) \\ v_{m+1,n+2} \cdot Ri_{m+1,n+1} & \left( v_{m+1,n+2} < 0 \right) \end{cases},$$

Where $v_{m+1,n+1}$ represents the meridional wind speed at the center point of the mesoscale grid, and $v_{m+1,n}$ and $v_{m+1,n+2}$ represent the meridional wind speeds at the midpoints of the two opposite sides in the longitudinal direction of the mesoscale grid respectively.

Optionally, after completing the first downscaling calculation based on the wind speed at the center point of the mesoscale grid, redistributing the wind speed at the corner point of the mesoscale grid within the downscaling grid based on the terrain elevation data, the land use type data and the aerodynamic parameters to implement the wind field downscaling calculation, further comprises:

Repeating the assignment and performing the downscaling calculation based on the downscaling grid after the first downscaling calculation until the resolution of the downscaling grid meets the requirement, and calculating the average wind speed of the downscaled wind field based on the downscaling grid with the resolution meeting the requirements.

Optionally, after the grid resolution meets the downscaling requirement, redistributing the wind speed at the corner point of the mesoscale grid within the downscaling grid based on the terrain elevation data, the land use type data and the aerodynamic parameters to implement the wind field downscaling calculation, further comprises:

According to the form of logarithmic law of the vertical wind profile, the change of the average wind speed of the downscaled wind field along the vertical direction being expressed as:

$$v_z = \frac{u_*}{\kappa} \left[ \ln \frac{z}{z_0} - \psi_m \left( \frac{z}{L_m} \right) \right],$$

Where $v_z$ is the average wind speed at height $z$, $u_*$ is the friction speed, $\kappa$ is the von Kármán constant, $z_0$ is the surface roughness length, $\psi_m$ is the stability correction function for the logarithmic profile of the average wind speed, and $L_m$ is Obukhov length.

Optionally, the height $z$ ranges from 0 to 150 m.

The beneficial effects of the present invention lie in that: the method of the present invention, i.e., It is based on the aerodynamic parameters of the two-dimensional simplified terrain, and a new wind field dynamic downscaling scheme is designated by adding the high-resolution terrain elevation data and the land use type data, can obtain a near-surface wind field with a horizontal resolution of 100 m level.

## BRIEF DESCRIPTION OF THE DRAWINGS

In order to make the objects, technical solutions and beneficial effects of the present invention clearer, the present invention is illustrated by providing the following drawings:

Fig. 1 is a flow chart of an embodiment of the present invention;
Fig. 2 is a schematic view of cross-section of a model according to an embodiment of the present invention;
Fig. 3 is a wind tunnel aerodynamic plane schematic view according to an embodiment of the present invention;
Fig. 4 is a schematic view of a latitudinal-direction downscaling calculation process according to an embodiment of the present invention;
Fig. 5 is a schematic view of a longitudinal-direction downscaling calculation process according to an embodiment of the present invention.

## DETAILED DESCRIPTION

Hereinafter, preferred embodiments of the present invention will be described in detail in combination with the accompanying drawings.

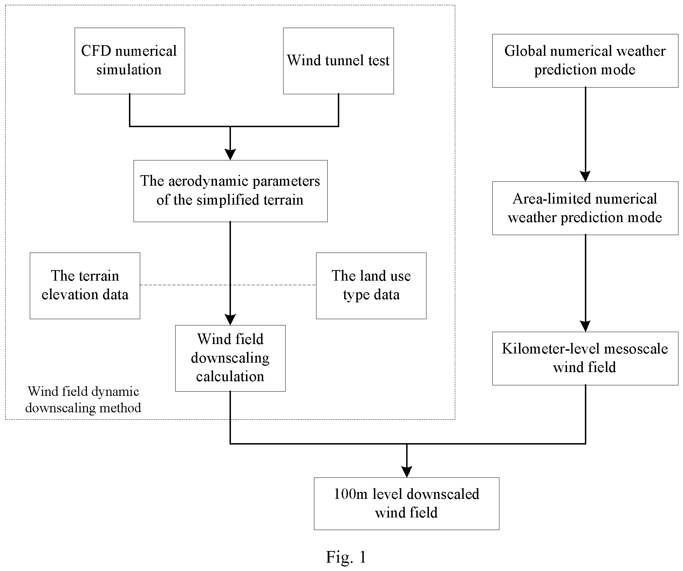

The present invention provides a wind field dynamic downscaling method based on aerodynamic parameters of simplified terrain. As shown in Fig. 1, the method comprises the following steps:

Numerically simulating the simplified terrain based on computational fluid dynamics to obtain the aerodynamic parameters of the simplified terrain;

Redistributing the wind speed at the corner point of a mesoscale grid within the downscaling grid based on terrain elevation data, land use type data and the aerodynamic parameters, to implement the wind field downscaling calculation.

In this embodiment, numerically simulating the simplified terrain based on computational fluid dynamics to obtain the aerodynamic parameters of the simplified terrain comprises that the CFD numerical simulation is completed by using the commercial software FLUENT. The coupling system of pressure and speed in CFD calculation is SIMPLEC algorithm, the governing equation is solved by a segregated method, and the pressure difference mode is PRESTO. The turbulence model uses the Realizable k-ε model, the convection term of the governing equation adopts the second-order upwind format, and the residual value is taken as $5\times10^{-4}$ according to the computational convergence criterion.

The numerical wind field of CFD adopts the uniform inflow boundary condition, the inflow adopts the speed inlet boundary condition, and the outflow adopts the pressure outlet boundary condition. The top surface uses a symmetrical boundary condition, which is equivalent to a free-slip wall surface. The bottom surface of the calculation domain and the surface of the research object adopt non-slip wall surfaces.

CFD numerical simulations were carried out for both upslope and downslope conditions, in which 12 kinds of slope angles such as 5°, 10°, 15°, 20°, 25°, 30°, 35°, 40°, 45°, 50°, 55°, 60° are considered.

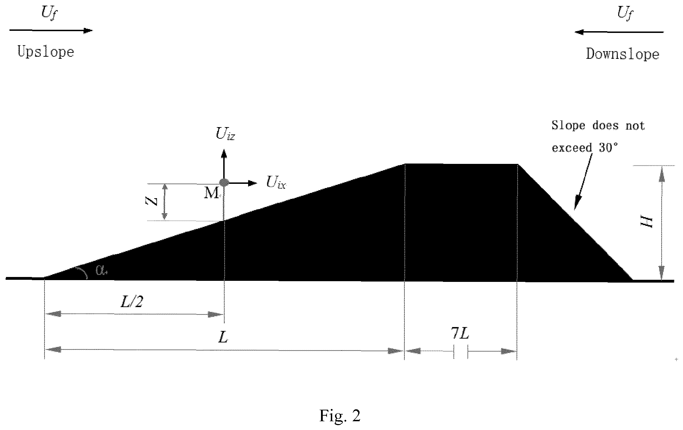

In this embodiment, as shown in Fig. 2, the simplified terrain in the embodiment specifically refers to a two-dimensional simplified terrain, in which the slope α is used as a characteristic parameter and the two basic formations of two-dimensional wind speed inflow upslope and downslope are considered.

In this embodiment, before redistributing the wind speed at the corner point of the mesoscale grid within the downscaling grid based on the terrain elevation data, the land use type data and the aerodynamic parameters to implement the wind field downscaling calculation, the method further comprises: acquiring the mesoscale wind field of a region based on an area-limited numerical weather prediction mode.

As to the specific Terrain Elevation Data, this embodiment adopts the data obtained in the Shuttle Radar Topography Mission (SRTM) conducted in 2000 by the National Aeronautics and Space Administration (NASA), which is referred to as SRTM data.

The land use type data adopts the global 30-meter ground-surface coverage data (GlobeLand30) released by the National Geomatic Center of China in 2010. The images classified in the GlobeLand30 are multi-spectral images with a horizontal resolution of 30 m, including United States Land Resources Satellite (Landsat) TM5, ETM+ multispectral images and China Environmental Disaster Reduction Satellite (HJ-1) multispectral images. The GlobeLand30 data consists of 10 types of cultivated land, forests, grasslands, shrubs, water areas, wetlands, tundra, man-made cover, bare land, glaciers and permanent snow.

Acquiring the mesoscale wind field of a region based on an area-limited numerical weather prediction mode comprises, firstly, acquiring global numerical forecast data by a global numerical weather prediction mode; then acquiring the numerical forecast data of the region by the area-limited numerical weather prediction mode, including a near-surface wind field, i.e., the mesoscale wind field having horizontal resolution of kilometer level.

In this embodiment, after numerically simulating the simplified terrain based on computational fluid dynamics to obtain the aerodynamic parameters of the simplified terrain, the method further comprises: performing a wind tunnel test to verify the aerodynamic parameters of the simplified terrain obtained by numerical simulation.

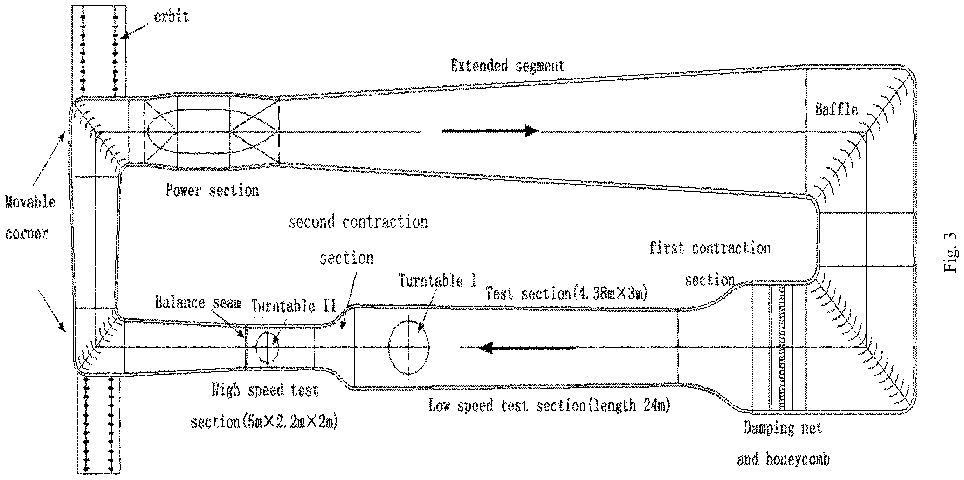

As shown in Fig. 3, it is a wind tunnel aerodynamic plane schematic view according to an embodiment of the present invention. The wind tunnel used in this embodiment is a series-wound double-test-section back-flow/direct-flow large-scale multifunctional boundary layer wind tunnel, wherein its low-speed test section is 4.4 m wide, 3.0 m high and 24.0 m long, and the maximum wind speed is greater than 30.0 m/s; its highspeed test section is 2.2 m wide, 2 m high and 5.0 m long, and the maximum wind speed is greater than 80.0 m/s, as shown in Fig.3.

In this embodiment, the wind tunnel test is a pressure-measuring test for rigid models. In this embodiment, four types of models M1, M2, M3, and M4 are experimentally fabricated. As shown in Fig. 2, the cross-sectional dimensions of four models M1, M2, M3, and M4 are shown in Table 1:

Table 1: Parameters of Models M1~M4

| Model No. | Slope angle α | Characteristic Dimension $L$/mm | Model Height $H$/mm | Blocking Rate/% |
|---|---|---|---|---|
| M1 | 15° | 500 | 133.97 | 4.47 |
| M2 | 30° | 400 | 230.94 | 7.70 |
| M3 | 45° | 200 | 200 | 6.67 |
| M4 | 60° | 150 | 259.81 | 8.66 |

The specific test parameters of the wind tunnel test in this embodiment are shown in Table 2.

Table 2: Technical Parameters of Wind Tunnel Test

| Classification of Parameters | Name of Parameters | Indexes |
|---|---|---|
| Meteorology, Geomorphology and Building Environment | Inflow Conditions | Uniform Flow Field |
| Model Parameters | Dimensions of Test Section | 4.4m width × 3m height × 24m length |
| | Form of Model | Rigid Model |
| | Number of Models | 5 |
| Test Parameters | Wind Speed of Free Inflow | 7 m/s |
| | Pressure-Measuring Sampling frequency | 330 Hz |
| | Pressure-Measuring Sampling Time | 60 s |
| | Wind Speed Sampling Frequency | 625 Hz |
| | Wind Speed Sampling Time | 60 s |

Optionally, in this embodiment, the aerodynamic parameter of the two-dimensional simplified terrain acquired by the CFD numerical simulation and wind tunnel test is the average wind speed ratio of the midpoint of the slope, and the average wind speed ratio satisfies:

$$R_{ix} = \frac{U_{ix}}{U_f}, \quad R_{iz} = \frac{U_{iz}}{U_f},$$

Wherein $R_{ix}$ and $R_{iz}$ are the average wind speed ratios of the measured point $i$ in the downwind direction and the vertical direction respectively, $U_{ix}$ and $U_{iz}$ are the average wind speeds of the measured point $i$ in the downwind direction and the vertical direction respectively, and $U_f$ is the average wind speed of the uniform inflow.
Optionally, in this embodiment, redistributing the wind speed at the corner point of the mesoscale grid within the downscaling grid based on the terrain elevation data, the land use type data and the aerodynamic parameters to implement the wind field downscaling calculation, comprises:

Assigning the wind speed at the corner point of the mesoscale grid to the downscaling grid;
Calculating the wind speed at the midpoint of the mesoscale grid based on the downscaling grid with the assignment;
Calculating the wind speed at the center point of the mesoscale grid based on the wind speed at the midpoint of the mesoscale grid;
Completing a first downscaling calculation based on the wind speed at the center point of the mesoscale grid.

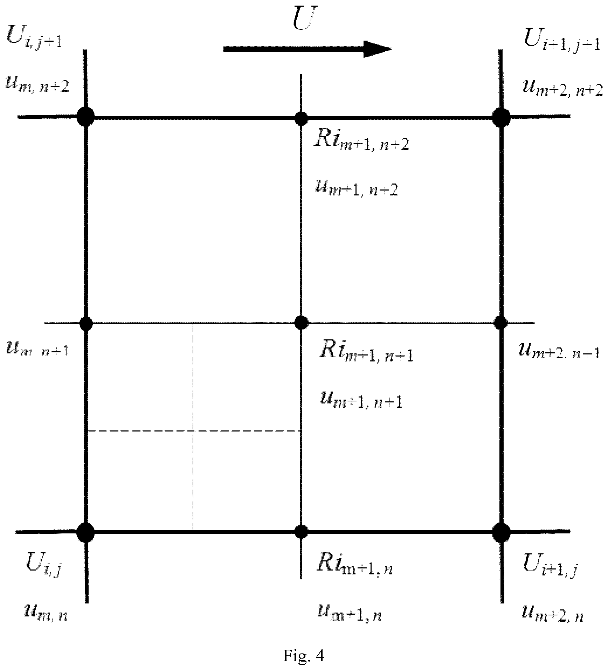

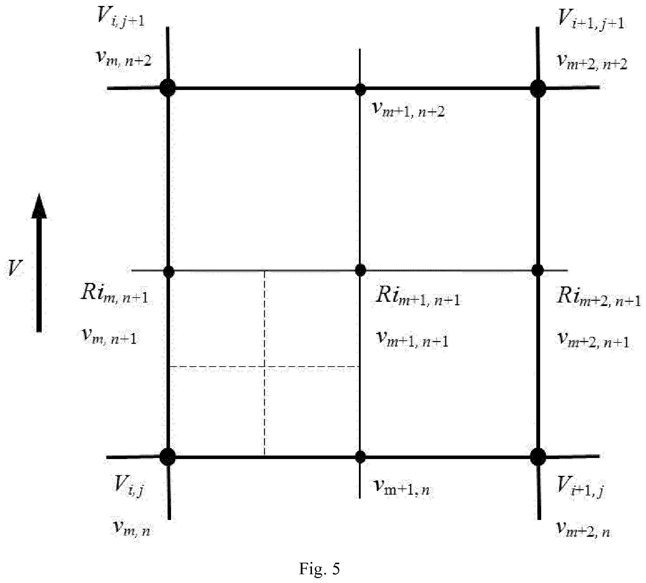

Specifically, the downscaling calculation includes calculations in two directions, namely zonal wind speed and meridional wind speed, corresponding to the grid division diagrams of Figs. 4 and 5 respectively, which are further described below based on the contents of Figs. 4 and 5.
As shown in Fig. 4, for zonal wind speed, the calculation steps are described as follows:

1) firstly, assigning the wind speed $U$ at the four corner points of the mesoscale grid indicated by the thick solid lines in Fig. 4 to the downscaling grid $u$ indicated by the thin solid lines in Fig. 4:

$$u_{m,n} = U_{i,j}$$

$$u_{m+2,n} = U_{i+1,j}$$

$$u_{m,n+2} = U_{i,j+1}$$

$$u_{m+2,n+2} = U_{i+1,j+1}.$$

2) finding the zonal wind speed $u$ at the midpoints of the four sides of the mesoscale grid indicated by the thick solid lines in Fig. 4:

$$u_{m,n+1} = \frac{u_{m,n} + u_{m,n+2}}{2} = \frac{U_{i,j} + U_{i,j+1}}{2}$$

$$u_{m+2,n+1} = \frac{u_{m+2,n} + u_{m+2,n+2}}{2} = \frac{U_{i+1,j} + U_{i+1,j+1}}{2}$$

$$u_{m+1,n} = \begin{cases} u_{m,n} \cdot Ri_{m+1,n} = U_{i,j} \cdot Ri_{m+1,n} & \left(U_{i,j} > 0\right) \\ u_{m+2,n} \cdot Ri_{m+1,n} = U_{i+1,j} \cdot Ri_{m+1,n} & \left(U_{i+1,j} < 0\right) \end{cases}$$

$$u_{m+1,n+2} = \begin{cases} u_{m,n+2} \cdot Ri_{m+1,n+2} = U_{i,j+1} \cdot Ri_{m+1,n+2} & \left(U_{i,j+1} > 0\right) \\ u_{m+2,n+2} \cdot Ri_{m+1,n+2} = U_{i+1,j+1} \cdot Ri_{m+1,n+2} & \left(U_{i+1,j+1} < 0\right) \end{cases}.$$

3) finding the zonal wind speed $u$ at the center point of the mesoscale grid:

$$u_{m+1,n+1} = \begin{cases} u_{m,n+1} \cdot Ri_{m+1,n+1} & \left(u_{m,n+1} > 0\right) \\ u_{m+2,n+1} \cdot Ri_{m+1,n+1} & \left(u_{m+2,n+1} < 0\right) \end{cases}.$$

As shown in Fig. 5, for the meridional wind speed, the calculation steps are described as follows:

1) firstly, assigning the wind speed $V$ at the four corner points of the mesoscale grid indicated by the thick solid lines in Fig. 5 to the downscaling grid $v$ indicated by the thin solid lines in Fig. 5:

$$v_{m,n} = V_{i,j}$$

$$v_{m+2,n} = V_{i+1,j}$$

$$v_{m,n+2} = V_{i,j+1}$$

$$v_{m+2,n+2} = V_{i+1,j+1}.$$

2) finding the meridional wind speed at the midpoints of the four sides of the mesoscale grid indicated by thick solid lines:

$$v_{m+1,n} = \frac{v_{m,n} + v_{m+2,n}}{2} = \frac{V_{i,j} + V_{i+1,j}}{2}$$

$$v_{m+1,n+2} = \frac{v_{m,n+2} + v_{m+2,n+2}}{2} = \frac{V_{i,j+1} + V_{i+1,j+1}}{2}$$

$$v_{m,n+1} = \begin{cases} v_{m,n} \cdot Ri_{m,n+1} = V_{i,j} \cdot Ri_{m,n+1} & \left(V_{i,j} > 0\right) \\ v_{m,n+2} \cdot Ri_{m,n+1} = V_{i,j+1} \cdot Ri_{m,n+1} & \left(V_{i,j+1} < 0\right) \end{cases}$$

$$v_{m+2,n+1} = \begin{cases} v_{m+2,n} \cdot Ri_{m+2,n+1} = V_{i+1,j} \cdot Ri_{m+2,n+1} & \left(V_{i+1,j} > 0\right) \\ v_{m+2,n+2} \cdot Ri_{m,n+1} = V_{i+1,j+1} \cdot Ri_{m+2,n+1} & \left(V_{i+1,j+1} < 0\right) \end{cases}.$$

3) finding the meridional wind speed $v$ at the center point of the mesoscale grid:

$$v_{m+1,n+1} = \begin{cases} v_{m+1,n} \cdot Ri_{m+1,n+1} & \left(v_{m+1,n} > 0\right) \\ v_{m+1,n+2} \cdot Ri_{m+1,n+1} & \left(v_{m+1,n+2} < 0\right) \end{cases}.$$

That is, the wind speed at the center point of the mesoscale grid includes the zonal wind speed at the center point of the mesoscale grid and the meridional wind speed at the center point of the mesoscale grid.
The zonal wind speed at the center point of the mesoscale grid satisfies:

$$u_{m+1,n+1} = \begin{cases} u_{m,n+1} \cdot Ri_{m+1,n+1} & \left(u_{m,n+1} > 0\right) \\ u_{m+2,n+1} \cdot Ri_{m+1,n+1} & \left(u_{m+2,n+1} < 0\right) \end{cases},$$

Where $u_{m+1,n+1}$ represents the zonal wind speed at the center point of the mesoscale grid, and $u_{m,n+1}$ and $u_{m+2,n+1}$ represent the zonal wind speeds at the midpoints of the two opposite sides in the latitudinal direction of the mesoscale grid respectively, and $Ri_{m+1,n+1}$ represents the average wind speed ratio at the center point of the mesoscale grid;
The meridional wind speed at the center point of the mesoscale grid satisfies:

$$v_{m+1,n+1} = \begin{cases} v_{m+1,n} \cdot Ri_{m+1,n+1} & \left(v_{m+1,n} > 0\right) \\ v_{m+1,n+2} \cdot Ri_{m+1,n+1} & \left(v_{m+1,n+2} < 0\right) \end{cases},$$

Where $v_{m+1,n+1}$ represents the meridional wind speed at the center point of the mesoscale grid, and $v_{m+1,n}$ and $v_{m+1,n+2}$ represent the meridional wind speeds at the midpoints of the two opposite sides in the longitudinal direction of the mesoscale grid respectively.
Optionally, after completing the first downscaling calculation based on the wind speed at the center point of the mesoscale grid, redistributing the wind speed at the corner point of the mesoscale grid within the downscaling grid based on the terrain elevation data, the land use type data and the aerodynamic parameters to implement the wind field downscaling calculation, further comprises:

Repeating the assignment and performing the downscaling calculation based on the downscaling grid after the first downscaling calculation until the resolution of the downscaling grid meets the requirement, and calculating the average wind speed of the downscaled wind field based on the downscaling grid with the resolution meeting the requirements.

The first downscaling calculation was completed. To further downscale, the downscaling calculation steps 1) ~ 3) for the zonal wind speed and the meridional wind speed are repeated within the four downscaling grids indicated by thin solid lines in Figs. 4 and 5, and the second downscaling calculation is performed to find the zonal wind speed $u$ and the meridional wind speed $v$ at various points inside the downscaling grids. It is repeated like this until the horizontal resolution meets the downscaling requirement.

According to the foregoing equations, in the present embodiment, the average wind speed calculation of the downscaled wind field with a height of 10 m is taken as an example. $U$ and $V$ are the average zonal wind speed and the average meridional wind speed at a height of 10 m from the ground surface in the mesoscale mode, which may be derived from the output results of the area-limited numerical weather mode; $u$, $v$ are the average zonal wind speed and the average meridional wind speed at a height of 10 m from the ground surface in the downscaled wind field; $Ri$ is the average wind speed ratio obtained by the CFD numerical simulation. Assuming that the horizontal resolution of the mesoscale grid is $\Delta x$ of kilometer level, the horizontal resolution is $\Delta x/2$ after the first downscaling is completed; the horizontal resolution is $\Delta x/4$ after the second downscaling is completed; its horizontal resolution is $\Delta x/8$ after the third downscaling is completed, and so on.

Based on the foregoing scheme, the average wind speed at a height of 10 m from the ground surface in the downscaled wind field can be obtained:

$$v10_{m+p,n+q} = \sqrt{u_{m+p,n+q}^2 + v_{m+p,n+q}^2}; \quad p = 0,1,\ldots \quad q = 0,1,\ldots$$

$$\theta10_{m+p,n+q} = \arctan\left(\frac{v_{m+p,n+q}}{u_{m+p,n+q}}\right); \quad p = 0,1,\ldots \quad q = 0,1,\ldots$$

Where $v10$ and $\theta100$ are the average total wind speed and average wind direction at a height of 10 m from the ground surface in the downscaled wind field, respectively.

Optionally, after the grid resolution meets the downscaling requirement, redistributing the wind speed at the corner point of the mesoscale grid within the downscaling grid based on the terrain elevation data, the land use type data and the aerodynamic parameters to implement the wind field downscaling calculation, further comprises:

According to the form of logarithmic law of the vertical wind profile, the change of the average wind speed of the downscaled wind field along the vertical direction being expressed as:

$$v_z = \frac{u_*}{\kappa}\left[\ln\frac{z}{z_0} - \psi_m\left(\frac{z}{L_m}\right)\right]$$

Where $v_z$ is the average wind speed at height z, the height z ranges from 0 to 150 m, $u^*$ is the friction speed, $\kappa$ is the von Kármán constant, $\kappa$=0.40, $z_0$ is the surface roughness length (obtained by land use type data) , $\psi_m$ is the stability correction function for the logarithmic profile of the average wind speed, and $L_m$ is Obukhov length.

According to the average wind speed and average wind direction at a height of 10m from the ground surface obtained based on the above calculation, the average wind speeds at other heights are expressed as:

$$v_z = v10 \cdot \frac{\ln \dfrac{z}{z_0} - \psi_m\left(\dfrac{z}{L_m}\right)}{\ln \dfrac{10}{z_0} - \psi_m\left(\dfrac{10}{L_m}\right)}.$$

The method of the present invention is further described below in conjunction with specific embodiments.

In the current area-limited model named Shanghai Meteorological Bureau-WRF ADAS Rapid Refresh System (SMB-WARR), the horizontal grid spacing is 3 km and the number of grid points is 852×792.

After one downscaling calculation is performed using the downscaling method of the present invention, the horizontal grid spacing is 1.5 km, the number of grid points is 1703×1583 (about 2.7 million), and the calculation time for completing the 24-hour forecast is about 1.5 minutes;

After two downscaling calculations are performed using the downscaling method of the present invention, the horizontal grid spacing is 750 m, the number of grid points is 3405×3165 (about 10.78 million), and the calculation time for completing the 24-hour forecast is about 4 minutes;

After three downscaling calculations are performed, the horizontal grid spacing obtained is 375 m, the number of grid points is 6809×6329 (about 43.09 million), and the calculation time for completing the 24-hour forecast is about 12 minutes, as shown in Table 3.

Table 3: Statistics Table of Calculation Efficiency of the Downscaling Method in the Present Invention

| Number of Times of STIDM Downscaling | Horizontal Grid Spacing (m) | Number of Grids | Calculation Time (minutes) |
|---|---|---|---|
| 1 | 1500 | 1703×1583 (About 2.7 million) | 1.5 |
| 2 | 750 | 3405×3165 (About 10.78 million) | 4 |
| 3 | 375 | 6809×6329 (About 43.09 million) | 12 |

Based on the above technical solutions, the method of the present invention has the following advantages:

1. Downscaled area is large. Since the downscaling method of the present invention is to perform the downscaling calculation based on the mesoscale grid, its calculable area is very large and its horizontal range can reach thousands of kilometers, satisfying the need for large-area wind field forecast of the systems such as power grids, railways, and highways; the downscaled area in the method of the invention is larger than other existing downscaling techniques, e.g., CFD software (FLUENT or OpenFOAM) having the calculation horizontal range generally within several kilometers, and software such as CALMET and WT having the horizontal range generally within hundreds of kilometers.

2. Computational efficiency is high. The aerodynamic parameters of the simplified terrain, i.e., the average wind speed ratios, are made off-line, and a dynamic downscaling method based on a mesoscale grid is used, so the calculation efficiency is very high; the calculation of this method only takes a few minutes in contrast with the traditional dynamic downscaling schemes, for example, CFD software (FLUENT or OpenFOAM) having the calculation time of usually several hours or even days, and for example, the CALMET and WT tools having the calculation time of several hours.

3. The resolution of wind field is high. The method of the present invention will realize the refined wind field forecast under complex terrain conditions, and will provide important technical guarantee and business supports for the construction of the typhoon wind disaster early warning system within large areas such as transmission lines, railways and highways, and it is conducive to the development of disaster prevention and mitigation in coastal areas during typhoon landing; the horizontal resolution of the downscaled wind field obtained by this method is up to 100 m level, which will make it possible to accurately calculate the distribution of wind energy in any geographical location; in future life, if humans increase the utilization of wind power resources, the method of the present invention will provide technical support for efficient and accurate utilization of wind power resources, and contribute to clean energy and sustainable development of human beings.

It shall be noted that, in the text, the term "comprises", or "includes", or any other variants thereof, covers non-exclusive inclusion, such that a process, a method, an article, or a device comprising a series of elements includes not only those elements but also other elements that are not explicitly listed, or inherent elements of such a process, method, article, or device. Without further limitation, an element defined by the phrase "comprising a ..." does not exclude the existence of additional identical elements in the process, method, article or device that comprises the element.

The serial numbers of the embodiments of the present invention described above are merely for depiction, and do not mean that the embodiment is good or bad.

Through the description of the above embodiments, those skilled in the art can clearly realize that the method in the above embodiments can be implemented by means of software plus a necessary general hardware platform, and of course, it can also be implemented by hardware, but in many cases, the former is a better embodiment. Based on such understanding, the technical solution of the present invention essentially, or the part that contributes to the prior art, may be embodied in the form of a software product, and the computer software product is stored in a storage medium such as ROM/RAM, disk, optical disc, including a number of instructions for causing a terminal, which may be a cell phone, a computer, a server, an air conditioner, or a network device, etc., to perform the methods described in various embodiments of the present invention.

**Claims**

1. A wind field dynamic downscaling method based on aerodynamic parameters of simplified terrain, **characterized in that** the method comprises steps of:

   numerically simulating the simplified terrain based on computational fluid dynamics to obtain the aerodynamic parameters of the simplified terrain;
   redistributing the wind speed at the corner point of a mesoscale grid within the downscaling grid based on terrain elevation data, land use type data and the aerodynamic parameters, to implement the wind field downscaling calculation.

2. The method according to claim 1, **characterized in that** the simplified terrain is a two-dimensional simplified terrain including two basic formations, namely, two-dimensional wind speed inflow upslope and two-dimensional wind speed inflow downslope.

3. The method according to claim 1, **characterized in that**, after numerically simulating the simplified terrain based on computational fluid dynamics to obtain the aerodynamic parameters of the simplified terrain, the method further comprises:
   performing a wind tunnel test to verify the aerodynamic parameters of the simplified terrain obtained by numerical simulation.

4. The method according to claim 1, **characterized in that**, before redistributing the wind speed at the corner point of the mesoscale grid within the downscaling grid based on the terrain elevation data, the land use type data and the aerodynamic parameters to implement the wind field downscaling calculation, the method further comprises:
   acquiring the mesoscale wind field of a region based on an area-limited numerical weather prediction mode.

5. The method according to claim 4, **characterized in that**, said aerodynamic parameters of the simplified terrain comprise an average wind speed ratio at a midpoint of the slope, and said average wind speed ratio satisfies:

$$R_{ix} = \frac{U_{ix}}{U_f}, \quad R_{iz} = \frac{U_{iz}}{U_f},$$

wherein $R_{ix}$ and $R_{iz}$ are the average wind speed ratios of the measured point $i$ in the downwind direction and the vertical direction respectively, $U_{ix}$ and $U_{iz}$ are the average wind speeds of the measured point $i$ in the downwind direction and the vertical direction respectively, and $U_f$ is the average wind speed of the uniform inflow.

6. The method according to claim 5, **characterized in that**, redistributing the wind speed at the corner point of the mesoscale grid within the downscaling grid based on the terrain elevation data, the land use type data and the aerodynamic parameters to implement the wind field downscaling calculation comprises:

assigning the wind speed at the corner point of the mesoscale grid to the downscaling grid;
calculating the wind speed at the midpoint of the mesoscale grid based on the downscaling grid with the assignment;
calculating the wind speed at the center point of the mesoscale grid based on the wind speed at the midpoint of the mesoscale grid;
completing a first downscaling calculation based on the wind speed at the center point of the mesoscale grid.

7. The method according to claim 6, **characterized in that** the wind speed at the center point of the mesoscale grid comprises a zonal wind speed and a meridional wind speed at the center point of the mesoscale grid;
the zonal wind speed at the center point of the mesoscale grid satisfies:

$$u_{m+1,n+1} = \begin{cases} u_{m,n+1} \cdot Ri_{m+1,n+1} & \left(u_{m,n+1} > 0\right) \\ u_{m+2,n+1} \cdot Ri_{m+1,n+1} & \left(u_{m+2,n+1} < 0\right) \end{cases},$$

where $u_{m+1,n+1}$ represents the zonal wind speed at the center point of the mesoscale grid, $u_{m,n+1}$ and $u_{m+2,n+1}$ represent the zonal wind speeds at the midpoints of the two opposite sides in the latitudinal direction of the mesoscale grid respectively, and $Ri_{m+1,n+1}$ represents the average wind speed ratio at the center point of the mesoscale grid;
the meridional wind speed at the center point of the mesoscale grid satisfies:

$$v_{m+1,n+1} = \begin{cases} v_{m+1,n} \cdot Ri_{m+1,n+1} & \left(v_{m+1,n} > 0\right) \\ v_{m+1,n+2} \cdot Ri_{m+1,n+1} & \left(v_{m+1,n+2} < 0\right) \end{cases},$$

where $v_{m+1,n+1}$ represents the meridional wind speed at the center point of the mesoscale grid, and $v_{m+1,n}$ and $v_{m+1,n+2}$ represent the meridional wind speeds at the midpoints of the two opposite sides in the longitudinal direction of the mesoscale grid respectively.

8. The method according to claim 7, **characterized in that**, after completing the first downscaling calculation based on the wind speed at the center point of the mesoscale grid, redistributing the wind speed at the corner point of the mesoscale grid within the downscaling grid based on the terrain elevation data, the land use type data and the aerodynamic parameters to implement the wind field downscaling calculation further comprises:

repeating the assignment and performing the downscaling calculation based on the downscaling grid after the first downscaling calculation, until the resolution of the downscaling grid meets the requirement, and
calculating the average wind speed of the downscaled wind field based on the downscaling grid with the resolution meeting the requirements.

9. The method according to claim 8, **characterized in that**, after the resolution meets the downscaling requirement, redistributing the wind speed at the corner point of the mesoscale grid within the downscaling grid based on the terrain elevation data, the land use type data and the aerodynamic parameters to implement the wind field downscaling calculation further comprises:
according to the form of logarithmic law of the vertical wind profile, the change of the average wind speed of the downscaled wind field along the vertical direction is being expressed as:

$$v_z = \frac{u_*}{\kappa}\left[\ln\frac{z}{z_0} - \psi_m\left(\frac{z}{L_m}\right)\right],$$

where $v_z$ is the average wind speed at height $z$, $u^*$ is the friction speed, $\kappa$ is the von Kármán constant, $z_0$ is the surface roughness length, $\psi_m$ is the stability correction function for the logarithmic profile of the average wind speed, and $L_m$ is Obukhov length.

**10.** The method according to claim 9, **characterized in that** the height $z$ ranges from 0 to 150 m.

**Amended claims in accordance with Rule 137(2) EPC.**

**1.** A wind field dynamic downscaling method based on aerodynamic parameters of simplified terrain, **characterized in that** the method comprises steps of:

numerically simulating the simplified terrain based on computational fluid dynamics to obtain the aerodynamic parameters of the simplified terrain, wherein the simplified terrain is a two-dimensional simplified terrain including two basic formations, namely, two-dimensional wind speed inflow upslope and two-dimensional wind speed inflow downslope,

wherein the numerically simulating the simplified terrain based on computational fluid dynamics to obtain the aerodynamic parameters of the simplified terrain comprises that Computational Fluid Dynamics, abbreviated as CFD, numerical simulation is completed by using a software FLUENT, the coupling system of pressure and speed in the CFD calculation is SIMPLEC algorithm, the governing equation is solved by a segregated method, and the pressure difference mode is PRESTO, the turbulence model uses the Realizable k-ε model, the convection term of the governing equation adopts the second-order upwind format, and the residual value is taken as $5\times10^{-4}$ according to the computational convergence criterion;

wherein the numerical wind field of CFD adopts the uniform inflow boundary condition, the inflow adopts the speed inlet boundary condition, and the outflow adopts the pressure outlet boundary condition, the top surface uses a symmetrical boundary condition which is equivalent to a free-slip wall surface, the bottom surface of the calculation domain and the surface of the research object adopt non-slip wall surfaces;

wherein said aerodynamic parameters of the simplified terrain comprise an average wind speed ratio at a midpoint of the slope, and said average wind speed ratio satisfies:

$$R_{ix} = \frac{U_{ix}}{U_f},$$

$$R_{iz} = \frac{U_{iz}}{U_f},$$

wherein $R_{ix}$ and $R_{iz}$ are the average wind speed ratios of the measured point $i$ in the downwind direction and the vertical direction respectively, $U_{ix}$ and $U_{iz}$ are the average wind speeds of the measured point $i$ in the downwind direction and the vertical direction respectively, and $U_f$ is the average wind speed of the uniform inflow; the method further comprising:

acquiring the mesoscale wind field of a region based on an area-limited numerical weather prediction mode;
redistributing the wind speed at the corner point of a mesoscale grid within the downscaling grid based on terrain elevation data, land use type data and the aerodynamic parameters, to implement the wind field downscaling calculation;
**characterized in that**
redistributing the wind speed at the corner point of the mesoscale grid within the downscaling grid based on the terrain elevation data, the land use type data and the aerodynamic parameters to implement the wind field downscaling calculation comprises:

assigning the wind speed at the corner point of the mesoscale grid to the downscaling grid;
calculating the wind speed at the midpoint of the mesoscale grid based on the downscaling grid with the assignment;
calculating the wind speed at the center point of the mesoscale grid based on the wind speed at the midpoint of the mesoscale grid;
completing a first downscaling calculation based on the wind speed at the center point of the mesoscale grid;

the wind speed at the center point of the mesoscale grid comprises a zonal wind speed and a meridional wind speed at the center point of the mesoscale grid;
the zonal wind speed at the center point of the mesoscale grid satisfies:

$$u_{m+1,n+1} = \begin{cases} u_{m,n+1} \cdot Ri_{m+1,n+1} & (u_{m,n+1} > 0) \\ u_{m+2,n+1} \cdot Ri_{m+1,n+1} & (u_{m+2,n+1} < 0) \end{cases},$$

where $u_{m+1,n+1}$ represents the zonal wind speed at the center point of the mesoscale grid, $u_{m,n+1}$ and $u_{m+2,n+1}$ represent the zonal wind speeds at the midpoints of the two opposite sides in the latitudinal direction of the mesoscale grid respectively, and $Ri_{m+1,n+1}$ represents the average wind speed ratio at the center point of the mesoscale grid;
the meridional wind speed at the center point of the mesoscale grid satisfies:

$$v_{m+1,n+1} = \begin{cases} v_{m+1,n} \cdot Ri_{m+1,n+1} & (v_{m+1,n} > 0) \\ v_{m+1,n+2} \cdot Ri_{m+1,n+1} & (v_{m+1,n+2} < 0) \end{cases},$$

where $v_{m+1,n+1}$ represents the meridional wind speed at the center point of the mesoscale grid, and $v_{m+1,n}$ and $v_{m+1,n+2}$ represent the meridional wind speeds at the midpoints of the two opposite sides in the longitudinal direction of the mesoscale grid respectively.

2. The method according to claim 1, **characterized in that**, after numerically simulating the simplified terrain based on computational fluid dynamics to obtain the aerodynamic parameters of the simplified terrain, the method further comprises:
performing a wind tunnel test to verify the aerodynamic parameters of the simplified terrain obtained by numerical simulation.

3. The method according to claim 1, **characterized in that**, after completing the first downscaling calculation based on the wind speed at the center point of the mesoscale grid, redistributing the wind speed at the corner point of the mesoscale grid within the downscaling grid based on the terrain elevation data, the land use type data and the aerodynamic parameters to implement the wind field downscaling calculation further comprises:

repeating the assignment and performing the downscaling calculation based on the downscaling grid after the first downscaling calculation, until the resolution of the downscaling grid meets the requirement, and
calculating the average wind speed of the downscaled wind field based on the downscaling grid with the resolution meeting the requirements.

4. The method according to claim 3, **characterized in that**, after the resolution meets the downscaling requirement, redistributing the wind speed at the corner point of the mesoscale grid within the downscaling grid based on the terrain elevation data, the land use type data and the aerodynamic parameters to implement the wind field downscaling calculation further comprises:
according to the form of logarithmic law of the vertical wind profile, the change of the average wind speed of the downscaled wind field along the vertical direction is being expressed as:

$$v_z = \frac{u_*}{\kappa}\left[\ln\frac{z}{z_0} - \psi_m\left(\frac{z}{L_m}\right)\right],$$

where $v_z$ is the average wind speed at height z, $u^*$ is the friction speed, $\kappa$ is the von Kármán constant, $z_0$ is the surface roughness length, $\psi_m$ is the stability correction function for the logarithmic profile of the average wind speed, and $L_m$ is Obukhov length.

5. The method according to claim 4, **characterized in that** the height z ranges from 0 to 150 m.

Fig. 1

Fig. 2

Fig. 3

Fig. 4

Fig. 5

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CN 108 363 882 A (JIANGSU POWER DESIGN INST CO LTD OF CHINA ENERGY ENGINEERING GROUP) 3 August 2018 (2018-08-03) * abstract * ----- | 1-9 | INV. G06F30/20 G06F30/28 |

TECHNICAL FIELDS SEARCHED (IPC)

G06F

The present search report has been drawn up for all claims

| Place of search | Date of completion of the search | Examiner |
|---|---|---|
| The Hague | 12 May 2020 | Daman, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 4374

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2020

| Patent document cited in search report | Publication date | Patent family member(s) | Publication date |
|---|---|---|---|
| CN 108363882 A | 03-08-2018 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108363882 A
- CN 107688906 A
- CN 106326625 A
- CN 102930177 B